# EUROPEAN PATENT APPLICATION

(11) **EP 1 223 407 A1**
(43) Date of publication of application: **17.07.2002**
(21) Application number: 01956977.1
(22) Date of filing: 20.08.2001
(51) Int. Cl.: G01C 21/00, G08G 1/0969, G09B 29/10

(54) **VEHICLE-MOUNTED POSITION COMPUTING APPARATUS**

(30) Priority: 23.08.2000 JP 2000252851
(71) Applicant: MATSUSHITA ELECTRIC INDUSTRIAL CO., LTD, Kadoma-shi, Osaka 571-0000 (JP)
(72) Inventor: TAKASHIMA, Koji, Yokohama-shi, Kanagawa 245-0061 (JP)
(74) Representative: Casalonga, Axel
(86) International application number: JP0107127
(87) International publication number: WO0216873

(57) **Abstract**

According to the present invention, even when a road is in such condition that error may occur in detecting the position of a vehicle when only internal sensors are used, a lane on a road where the vehicle is currently traveling is determined, and the error is reduced. Traveling lane identifying means 17 is provided on a conventional type car navigation system, and a lane where the vehicle is currently traveling is identified, and it is inquired to map database as to whether the identified lane is an exclusive lane for right turn, left turn or advancing straight ahead. As a result, when it is found that it is an exclusive lane, processing of the position calculating means 15 is carried out only to a road ahead connected to advancing direction of the exclusive lane. After the vehicle has passed through an intersection, more accurate position can be calculated.

## Description

### FIELD OF THE INVENTION

The present invention relates to a vehicle-loaded position calculating device for calculating accurate position of a vehicle by utilizing information relating to advancing direction of a lane where the vehicle is currently driven or traveling along.

### BACKGROUND ART

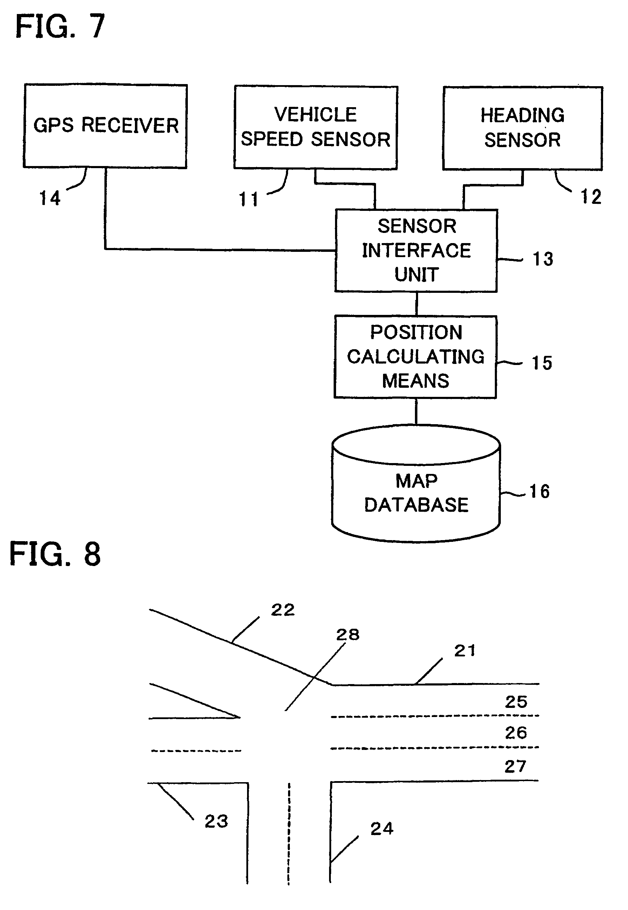

As shown in Fig. 7, according to a conventional type vehicle-loaded position calculating device, traveling distance of a vehicle obtained from a vehicle speed sensor 11 using vehicle speed pulses and a heading sensor 12 and a turning angle obtained from a heading sensor 12 using a gyroscope are transmitted to a sensor interface unit 13, and a data based on the so-called dead reckoning navigation method is obtained. Also, by using radio navigation method based on a GPS (global positioning system) receiver 14, absolute position information and absolute speed information of the vehicle are transmitted to the sensor interface unit 13. Both of these data given to the sensor interface unit 13 are transmitted to the position calculating means 15, and a position estimated to be the present position of the vehicle and a heading information are calculated.

Next, the present position of the vehicle and the heading information obtained by dead reckoning navigation method and radio navigation method as calculated above are compared with a road data in a map database 16 by the position calculating means 15, and the present position of the vehicle on the road is calculated.

Now, description will be given on a case where a vehicle is traveling on a road including an intersection as shown in Fig. 8. A road 21 is a main road, which comprises a plurality of lanes, i.e. lanes 25, 26 and 27. Among these lanes, the lane 25 is an exclusive lane for advancing toward a road 22, which is obliquely branched off in rightward direction. The lane 26 is an exclusive lane for advancing straight ahead, and the lane 27 is a lane, from which the vehicle can advance straight ahead or can make only left turn toward a road 24 leading to leftward direction.

It is supposed now that the vehicle is traveling on the road as described above from the right in Fig. 8 toward an intersection 28. When the vehicle-loaded position calculating device is used under this condition, and if it is a conventional type position calculating device based on map matching method, the position of the vehicle on the road is calculated as follows: The present heading of the vehicle traveling on the road 21 is compared with road heading of the road 22 and the road 23. The fact that heading difference is small is used as an index, and a more probable road is selected as the present position of the vehicle on the road 22 or the road 23, and the position of the vehicle on the road is calculated.

For this reason, when a branching angle of the road 22 with respect to the road 23 is small as shown in Fig. 8, the difference between the present heading of the vehicle and the heading of each road is very small. There are also other causes for error, and a road is erroneously selected by the position calculating device 15. For instance, when the vehicle is directed from the lane 25 to the road 22 for the purpose of advancing from the intersection 28 to the road 22, it is difficult to differentiate it from the case where the vehicle advances straight ahead from the lane 26 to the road 23. For this reason, it is not possible to identify that the vehicle is advancing by branching off to the road 22, and it is often erroneously judged that the vehicle is advancing straight ahead for long time after it has passed through the intersection. The error as described above also occurs when the difference of advancing direction is small between a plurality of roads, which are branched off at an interchange (entrance and exit) of an expressway.

### DISCLOSURE OF THE INVENTION

To solve the above problems of the prior art, it is an object of the present invention to provide a vehicle-loaded calculating system, by which it is possible to solve the problem of error in position calculation when a vehicle is advancing straight ahead on a road comprising a plurality of lanes by identifying the lane and for solving the problem of error in position calculation after the vehicle has changed the advancing direction, and it is possible to calculate accurate position of the vehicle.

To solve the above problems, the present invention provides a vehicle-loaded position calculating device for calculating the present position of a vehicle on a map by map matching, a present position information of the vehicle calculated by dead reckoning navigation method and radio navigation method is compared with a road data accumulated in a map data base, wherein said system comprises traveling lane identifying means for identifying a lane, and output of the traveling lane identifying means is compared with the present position information and road data.

In the arrangement as described above, from lane regulation information of a map database, it is judged which of the exclusive lanes (i.e. right turn, left turn, or advancing straight ahead) the vehicle is currently traveling, i.e. the lane as identified by the traveling lane identifying means is. Then, the road to be calculated is limited only to a road in advancing direction of the exclusive lane. Also, the next position is calculated preferentially to a road in advancing direction of the exclusive lane. In so doing, even at a branching point such as Y-shaped branching point where road is branched off at a small angle or at branching point at an entrance to expressway, it is possible to accurately calculate the position of the vehicle on a road where the vehicle currently is advancing.

### BRIEF DESCRIPTION OF THE DRAWINGS

Fig. 1 is a block diagram of a first embodiment of a vehicle-loaded position calculating device according to the present invention;
Fig. 2 is a drawing of a road where the first embodiment of the vehicle-loaded position calculating device of the present invention is in operation;
Fig. 3 is a block diagram of a second embodiment of a vehicle-loaded position calculating device according to the present invention;
Fig. 4 is a drawing of a road where the second embodiment of the vehicle-loaded position calculating device of the present invention is in operation;
Fig. 5 is a block diagram of a third embodiment of a vehicle-loaded position calculating device according to the present invention;
Fig. 6 is a drawing of a road where the third embodiment of the vehicle-loaded position calculating device of the present invention is in operation;
Fig. 7 is a block diagram of a conventional type vehicle-loaded position calculating device; and
Fig. 8 is a drawing of roads where the conventional type position calculating device is in operation.

### BEST MODE FOR CARRYING OUT THE INVENTION

### (1st Embodiment)

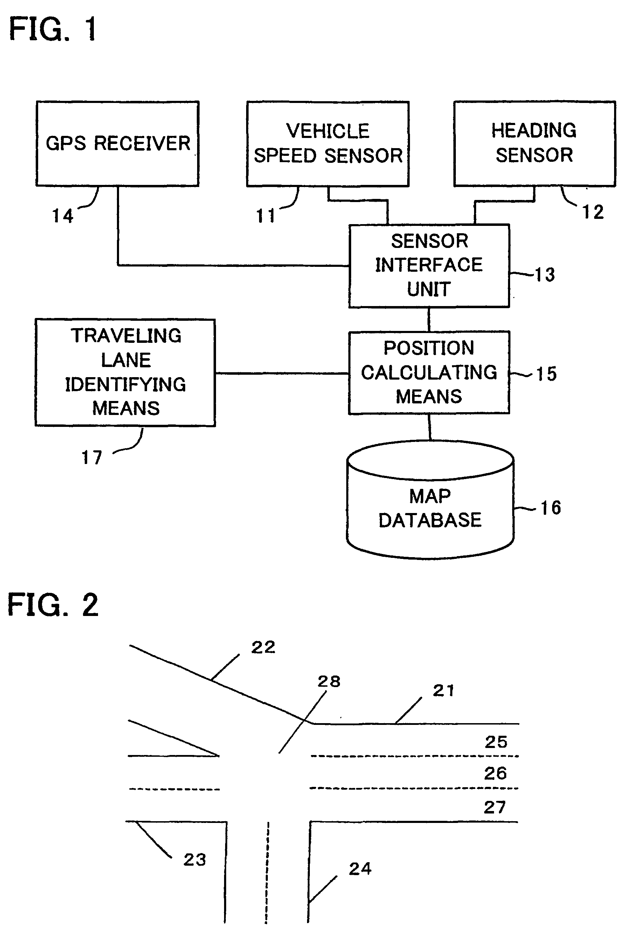

Fig. 1 is a block diagram showing an arrangement of a first embodiment of a vehicle-loaded position calculating device according to the present invention. In Fig. 1, a traveling distance and a turning angle of a vehicle obtained from a vehicle speed sensor 11 and a heading sensor 12 are transmitted to position calculating means 15 via a sensor interface unit 13. An absolute position information and an absolute speed information obtained from a GPS receiver 14 are also transmitted to the position calculating means 15 via the sensor interface unit 13. From the information obtained from the vehicle speed sensor 11 and the heading sensor 12, the position calculating means 15 calculates a position, which is estimated as the present position of the vehicle based on dead reckoning navigation method and radio navigation method. The present position information and the heading information of the vehicle obtained by dead reckoning navigation method and the radio navigation method are compared with a road data in a map database 16, and the present position of the vehicle on the road is calculated.

When a road where the vehicle is now traveling comprises a plurality of lanes, traveling lane identifying means 17 identifies which of the lanes the vehicle is now traveling, and a lane number is notified to the position calculating means 15. Now, description will be given on identification of the lane by the traveling lane identifying means 17. When a road where the vehicle is currently traveling is identified from the map database 16, a lane number data of the road is read. Also, a position measured by a gyroscope and number of vehicle speed pulses measured are detected by a sensor, and it is judged that the vehicle has turned during traveling or the vehicle is moved to a position in parallel to the traveling direction separated by a certain meter from the former position, the change of lane can be recognized. By continuously monitoring as to whether the lane has been changed or not, it is possible to identify the lane where the vehicle is now traveling along.

Also, if the road where the vehicle is now traveling is provided with function to receive "optical beacon", "a lane notification information" is included in the received data. Based on this information, it is possible to accurately identify the lane. Because not many roads are not in the condition to receive the optical beacon, it is desirable to simultaneously use a sensor data from the above sensors.

Next, the position calculating means 15 inquires the map database 16 as to whether regulation information such as right turn, left turn, or advancing straight ahead with respect to the notified lane is available or not. If the lane is an exclusive lane for a certain direction, the next position to be calculated of the vehicle is determined preferentially only to a road connected to that direction or to a road connected to the notified lane.

Fig. 2 is a drawing to show an example of a road which has a plurality of lanes. A road 21 comprises a plurality of lanes, i.e. lanes 25, 26 and 27. Here, the lane 25 is an exclusive lane for vehicles turning to right and advancing to a road 22, which is branched off rightward from the road 21. The lane 26 is an exclusive lane of vehicles advancing straight ahead, and the lane 27 is a lane where the vehicle can advance straight ahead or can turn to left toward a road 24. Now, we will discuss a case where a vehicle is traveling from the right of the road 21 toward an intersection 28.

In this case, the position calculating means 15 identifies that the vehicle is traveling on the road 21 based on dead reckoning navigation method using sensor data obtained from the vehicle speed sensor 11 and the heading sensor 12 and also based on radio navigation method using absolute position information and absolute speed information obtained from the GPS receiver 13. Here, the lane where the vehicle is currently traveling is identified by the traveling lane identifying means 17 because the road 21 has a plurality of lanes.

It is supposed now that the vehicle is currently advancing on the lane 25. The identified lane number is notified to the position calculating means 15. The position calculating means 15 thus notified inquires the map database about a regulation information relating to the advancing direction of the lane where the vehicle is currently traveling. As a result, it is found that the lane 25 where the vehicle is currently traveling is a lane, along which the vehicle can advance only to the road 22 directed rightward. Therefore, the position of the vehicle on the road 22 can be calculated at a middle point between the road 22 and the road 23, i.e. at the intersection 28, without comparing the present heading with heading difference of the road 22 and the road 24. If the lane where the vehicle is now traveling is changed from the lane 25 to the lane 26 immediately before the road is branched off, the above procedure should be immediately executed again, and an object road, according to which the position of the vehicle is calculated, should be switched over to the road 23.

In the above embodiment, description has been given on a case where position is calculated only on the roads where the currently traveling lane should lead. However, it may be designed in such manner that, for the two roads branching off, the present heading of the vehicle is compared with heading difference of the roads, and means for selecting a more probable road as the present position is used. Then, weighting may be performed on the road, to which the vehicle can advance from the lane where the vehicle is currently traveling so that the road can be more easily selected.

A candidate position for the present position of the vehicle is kept in mind in the processing of the position calculating means 15, and it is judged that the vehicle is present on a road with the highest "likelihood" of the candidate position. The likelihood of the candidate position is adjusted to higher or lower, and a candidate position having the higher likelihood should be selected. The adjustment of the likelihood to higher or lower is performed as follows: For instance, it is supposed now that the vehicle is traveling along a trunk road, which runs straight ahead. It is also supposed that there is a road branched off leftward from this trunk road, and that a lane at the utmost left of the trunk road is an exclusive lane, on which the vehicle can only advance to the direction toward the branched road.

It is supposed now that the vehicle is traveling on the exclusive lane at the utmost left under the above condition. In this case, there are a candidate position A of the vehicle traveling straight ahead along the trunk road and a candidate position B of the vehicle advancing to the branched road. By utilizing the fact the vehicle is traveling on the exclusive lane advancing toward the branched road, the likelihood of the candidate A advancing straight ahead is lowered, and the likelihood of the candidate B advancing toward the branched road is raised. As a result, the candidate B is selected, and there is high possibility that the candidate position B is selected as the position of the vehicle.

### (2nd Embodiment)

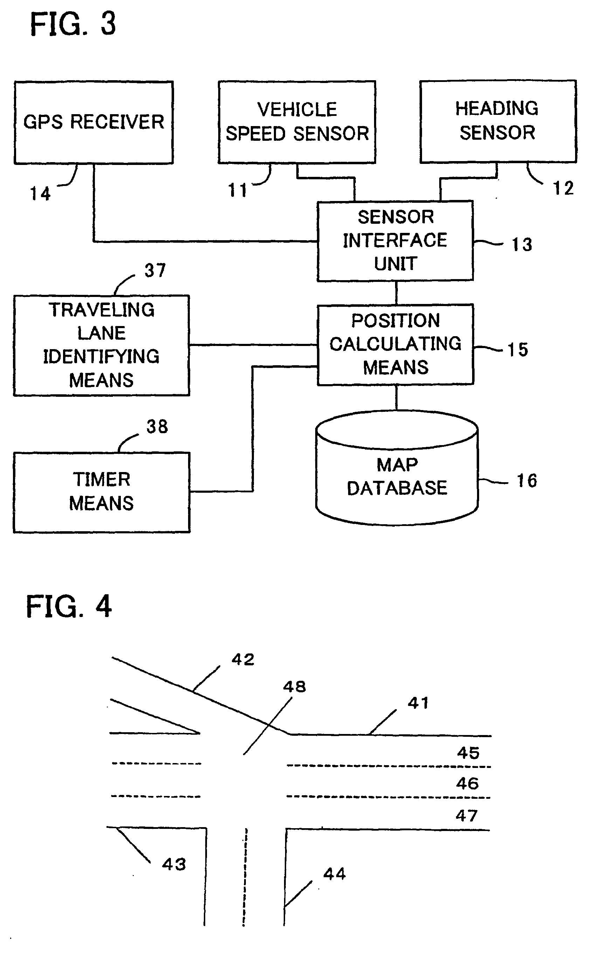

Fig. 3 is a block diagram of a second embodiment of the vehicle-loaded position calculating device according to the present invention. In Fig. 3, a vehicle speed sensor 11, a heading sensor 12, a sensor interface unit 13, a GPS receiver 14, position calculating means 15, a map database 16, and traveling lane identifying means 17 are the same as those shown in Fig. 1, and these are referred by the same symbols as in Fig. 1 respectively. The vehicle-loaded calculating system shown in Fig. 3 comprises timer means 38. The timer means 38 is provided with a function to obtain the current time and to notify this time to the position calculating means 15.

Regarding the lane notified from the traveling lane identifying means 17, the position calculating means 15 inquires the map database as to whether there is a road regulation information such as right turn, left turn, advancing straight ahead, etc. at the current time notified from the timer means 38. If the lane with the notified lane number is an exclusive lane advancing toward a certain direction, the next calculated position of the vehicle is determined preferentially only to a road connected to that direction or to a road connected with the notified direction.

Fig. 4 is a drawing to show an example of a road where there are a plurality of lanes including lanes for right turn, left turn and an exclusive lane for advancing straight ahead, for which regulation is changed depending on the current time. A road 41 comprises a plurality of lanes, i.e. lanes 45, 46 and 47. In this case, the lane 45 is an exclusive lane advancing toward a road 42, which is branched off rightward. During a period from time T1 to time T2, left turn to the road 42 is prohibited. Therefore, the lane 45 is turned to an exclusive lane for advancing straight ahead during this period. The lane 46 is an exclusive lane for advancing straight ahead, and the lane 47 is a lane, along which the vehicle can advance straight ahead or can turn to left toward the road 47.

It is supposed now that the vehicle is traveling along the road 41 from the right (in the figure) toward an intersection 48. By dead reckoning navigation method using a sensor data obtained from the vehicle speed sensor 11 and the heading sensor 12 and by radio navigation method using absolute position information and absolute speed information obtained from the GPS receiver 14, the position calculating means 15 determines that the vehicle is traveling on the road 41. The road 41 comprises a plurality of lanes, and the lane where the vehicle is currently traveling is identified by the traveling lane identifying means 17. Supposing that the vehicle is currently traveling on the lane 45, the identified lane number is notified to the position calculating means 15.

Upon receipt of the notification, the position calculating means 15 inquires the map database 16 as to whether there is regulation information regarding advancing direction of the lane where the vehicle is currently traveling. It is now found that the lane 45 where the vehicle is currently traveling is a lane where right turn is prohibited during time period between time T1 and time T2 and the vehicle can advance straight forward only to the road 43. Thus, based on traffic regulation sign, accurate position on the road can be automatically calculated after the vehicle has passed through the intersection 48. Depending on the time period, the lane is turned to an exclusive lane for right turn toward the road 42. The driver simply drives the vehicle according to the traffic regulation signal, and the position calculation is performed automatically and accurately.

### (3rd Embodiment)

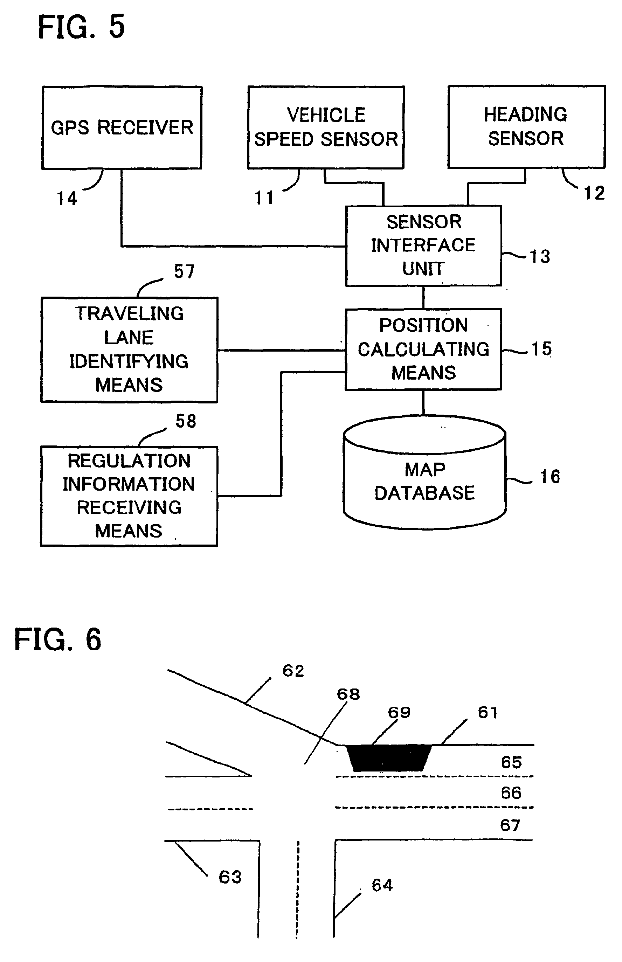

Fig. 5 is a block diagram showing an arrangement of a third embodiment of the vehicle-loaded position calculating device according to the present invention. In Fig. 5, a vehicle speed sensor 11, a heading sensor 12, a sensor interface unit 13, a GPS receiver 14, position calculating means 15, a map database 16 and traveling lane identifying means 17 are the same as those shown in Fig. 1, and these are referred by the same symbols respectively. The vehicle-loaded position calculating device shown in Fig. 5 comprises regulation information receiving means 58. The regulation information receiving means 58 notifies a received road regulation information to the position calculating means 15.

Regarding the lane notified from the traveling lane identifying means 17, the position calculating means 15 inquires the map database as to whether or not there is regulation information such as right turn, left turn, advancing straight ahead, etc. If the lane is an exclusive lane to advance to a certain direction, it is retrieved whether or not there is regulation information regarding the road received from the regulation information receiving means 58.

If there is such information, priority is given to the received regulation information over the exclusive lane information obtained from the map database 16, and the next position of the vehicle is calculated preferentially only to the road connected to a direction, to which the lane currently traveling can advance, or to that road.

Fig. 6 shows an example of a road where there are a plurality of lanes including exclusive lanes for right turn, left turn or advancing straight ahead. A road 61 comprises a plurality of lanes, i.e. lanes 65, 66 and 67. Here, the lane 65 is an exclusive lane under normal traffic condition for advancing toward a road 62 branched off rightward. The lane 66 is an exclusive lane for advancing straight ahead, and the lane 67 is an exclusive lane for advancing straight ahead and also for left turn toward a road 64. It is now supposed that the vehicle is traveling from the right (in the figure) of the road 61 toward an intersection 68.

Under the condition shown in Fig. 6, there is an under-construction area 69 on the lane 65, and the vehicle cannot make right turn directly from the lane 65 to the road 62. It is supposed that, for this reason, the regulation for the exclusive lane is temporarily changed so that right turn can be made from the lane 66 to the road 62.

In this case, by the dead reckoning navigation method using sensor data obtained from the vehicle speed sensor 11 and the heading sensor 12 and by radio navigation method using absolute position information and absolute speed information obtained from the GPS receiver 14, the position calculating means 15 determines that the vehicle is currently traveling on the road 61. Here, it is also supposed that the lane where the vehicle is currently traveling is identified by the traveling lane identifying means 17 and the lane number 65 is notified to the position calculating means 15. Further, it is supposed that the vehicle is being directed to right turn from the road 61 to the road 62.

However, the exclusive lane 65 for right turn is blocked by the under-construction area 69, and traffic regulation is changed so that the vehicle should make right turn from the lane 66 to the road 62. The vehicle moves to the lane 66 and then makes right turn to the road 62. In this case, if the next position on the road is calculated only by the advancing road from the exclusive lane as in the first embodiment, even when the vehicle has advanced to the road 62 via the lane 66, the position calculating means 15 cannot definitely determine whether or not the vehicle has moved to the road 62 because the vehicle has advanced on the lane 66.

In the third embodiment, position calculation is performed preferentially to the received regulation information over the exclusive lane information obtained from the map database 16 as follows: Due consideration is given on the fact that regulation information is received by the regulation information receiving means 58, i.e. information that "there is an under-construction area 69 on the lane 65, and right turn may be made temporarily from the lane 66". In this case, by the regulation information, the lane 66 is temporarily changed to an exclusive lane for advancing to the road 62 and the road 63. Even when the vehicle has passed through the lane 66, it is estimated that the vehicle has advanced to the road 62, and the position on the road is detected first.

### INDUSTRIAL APPLICABILITY

As described above, according to the present invention, when the vehicle is traveling on a road, which comprises a plurality of lanes including exclusive lanes for right turn, left turn or advancing straight ahead, a lane where the vehicle is currently traveling is identified, and inquiry is made to a map database, asking that the identified lane is an exclusive lane for which direction. If the lane where the vehicle is currently traveling is the exclusive lane, the position is calculated only for the road, to which the vehicle can advance via that lane. As a result, accurate position from the intersection can be calculated without error even on a road where it is difficult to calculate accurate position when only the conventional sensor information such as the information on the branched road is used.

## Claims

1. A vehicle-loaded position calculating device for calculating the present position of a vehicle on a map by map matching, through comparison between present position information of the vehicle calculated by dead reckoning navigation method and radio navigation method and road data accumulated in a map data base, **characterized by**
traveling lane identifying means for identifying a lane where the vehicle is currently traveling so that an output of said traveling lane identifying means is compared with said present position information / road data.

2. The vehicle-loaded position calculating device according to claim 1, **characterized in that** regulation information, which changes as time elapses, for right turn, left turn or advancing straight ahead of each lane is recorded together with the changing time in the road data accumulated in said map database.

3. The vehicle-loaded position calculating device according to claim 1, **characterized in that** there is provided regulation information receiving means for receiving lane regulation information on traffic congestion, accident, construction, etc.

## Amended claims

### Amended claims under Art. 19.1 PCT

**1.** (Amended) A vehicle-loaded position calculating device for calculating the present position of a vehicle on a map by map matching, through comparison between present position information of the vehicle calculated by dead reckoning navigation method and radio navigation method and road data accumulated in a map data base, **characterized by**
traveling lane identifying means for identifying a lane where the vehicle is currently traveling, and position calculating means for judging a branched road, to which the road identified by said traveling lane identifying means is connected, based on said road data and for raising likelihood to be selected of said branched road as the present position of said vehicle.

**2.** (Amended) The vehicle-loaded position calculating device according to claim 1, **characterized in that** regulation information, which changes as time elapses, for right turn, left turn or advancing straight ahead of each lane is recorded together with the changing time in the road data accumulated in said map database, and **in that** said position calculating means determines said branched road based on said regulation information.

**3.** (Amended) The vehicle-loaded position calculating device according to claim 1, **characterized in that** there is provided regulation information receiving means for receiving lane regulation information on traffic congestion, accident, construction, etc., and **in that** said position calculating means determines said branched road based on said lane regulation information.
